# EUROPÄISCHE PATENTANMELDUNG

(11) **EP 2 211 118 A2**
(43) Veröffentlichungstag der Anmeldung: **28.07.2010**
(21) Anmeldenummer: 10000831.7
(22) Anmeldetag: 27.01.2010
(51) Int. Cl.: F24D 3/14

(54) **Flächenaustauscherelement zum Heizen und/oder Kühlen**

(30) Priorität: 27.01.2009 DE 102009006344
(71) Anmelder: Krauthöfer, Hans Peter, 95158 Kirchenlamitz (DE)
(72) Erfinder: Krauthöfer, Hans Peter, 95158 Kirchenlamitz (DE)
(74) Vertreter: LOUIS, PÖHLAU, LOHRENTZ

(57) **Zusammenfassung**

Es wird ein Flächenaustauscherelement (1) zum Heizen und/oder Kühlen beschrieben. In dem Flächenaustauscherelement ist (1) ein von einem flüssigen Wärmeträger durchströmtes Austauscherrohr (12) angeordnet, das einen Austauscherabschnitt und Anschlussabschnitte (12a) aufweist. Das Austauscherrohr (12) ist in Aufnahmenuten (11a) einer Trägerplatte(11) angeordnet, wobei die Trägerplatte (11) auf ihrer Vorderseite von einer Speicherplatte (111) und auf ihrer Rückseite von einer Wärmedämmplatte (114) überdeckt ist. Zwischen der Trägerplatte (11) und der Speicherplatte (111) ist eine stark wasserbeständige, diffusionsoffene und gut wärmeleitende erste Kleberschicht (112) und zwischen der Rückseite der Trägerplatte (11) und der Vorderseite der Wärmedämmplatte (114) ist eine stark wasserbeständige zweite Kleberschicht (115) angeordnet.

## Beschreibung

Die Erfindung betrifft ein Flächenaustauscherelement zum Heizen und/oder Kühlen.

Flächenaustauscherelemente zum Heizen und/oder Kühlen sind eine Voraussetzung, um alternative Energiequellen, wie zum Beispiel Wärmepumpen, effektiv für die Klimatisierung von Innenräumen einsetzen zu können. Aufgrund der geringen Temperaturdifferenz zwischen Vorlauftemperatur und Raumtemperatur muss eine große Fläche für den Wärmeaustausch bereitgestellt werden.

Es ist bekannt, Austauscherrohre in Fußböden oder an Wänden großflächig zu verlegen und an einen Wärmemittelkreislauf oder auch Kühlkreislauf anzuschließen, was jedoch mit einem hohen Arbeitsaufwand, Schmutzanfall sowie Eintrag von Feuchtigkeit verbunden sein kann. So werden Fußbodenheizungen in den Estrich eingegossen, wobei erst nach dem Aushärten des Estrichs der Fußboden fertiggestellt werden kann, was zu langen Bauzeiten führen kann.

Es sind auch Trockenbaulösungen bekannt, die allerdings auch immer noch einen beträchtlichen Arbeitsaufwand erfordern oder nicht universell einsetzbar sind.

In der DE 20 2005 004 216 U1 wird ein Heiz- und/oder Kühlelement für eine ein Ständerwerk aufweisende Trockenbauwand beschrieben, bei der ein von einem temperierbaren Medium durchströmtes Rohr an einem wärmeleitenden Trägerelement befestigt ist, das mindestens einen Klebestreifen zur Fixierung des Trägerelements an dem Ständerwerk der Trockenbauwand aufweist.

In der AT 006 507 U1 wird ein Heizelement für Warmwasserheizungen und Klimatisierungsanlagen beschrieben, das als ein für sich verleg- bzw. montierbares Flächenaustauscherelement ausgebildet ist. Es ist vorgesehen, an der Rückseite eines Trägers aus Fasermaterial mit mineralischer Bindung ein oder mehrere Austauscherrohre in Aufnahmevertiefungen anzuordnen und das Heizelement so zu montieren, dass die Austauscherrohre zu einer Wand weisen, an der das Heizelement montiert ist. Die Heizelemente können auch eine Abdeckung aufweisen.

In der DE 20 2004 012 708 U1 ist eine Vorrichtung zur Aufnahme von Heizungs-/Kühlungsschläuchen für eine Flächenheizung/-kühlung beschrieben, bei der ein Modulkörper aus hochverdichtetem, pulverförmigem, mit Bindemittel verfestigtem Holzfasermaterial besteht, der die Heizungs-/Kühlungsschläuche aufnimmt. Die Heizungs-/Kühlungsschläuche sind durch eine Metallplatte zwecks besserer Wärmeleitung überdeckt, die wiederum durch eine Platte aus dem vorgenannten Holzfasermaterial überdeckt ist.

In der DE 42 10 885 A1 wird eine Heizungsvorrichtung für durch Wandungen gebildete Fahrzeugräume für Reisende oder Fracht beschrieben. Die Wandungen bestehen aus vorgefertigten plattenförmigen Elementen, die in ihrem Kernbereich eine Schicht aus wärmedämmendem Material entsprechender Festigkeit, wie zum Beispiel Kunststoffschaum aufweisen. An der dem Fahrzeuginnenraum zugewandten Oberfläche der Schicht ist ein flächenhaftes Heizungssystem vorgesehen aus parallel zueinander verlaufenden Rohren angeordnet. Die Rohre sind von einer Deckschicht aus mechanisch widerstandsfähigem Material überdeckt.

In der US 5 879 491 A wird ein Verfahren zur Installation einer Bodenheizung beschrieben. Von einer Heizflüssigkeit durchströmte Rohre werden auf eine Basisstruktur aufgeklebt und von einem fließfähigen Bodensubstratmaterial überdeckt, das nach dem Aushärten einen selbst ausgerichteten Untergrund bildet.

Die vorgenannten Flächenaustauscherelemente sind zwar leichter verlegbar, als in Estrich oder dergleichen eingegossene Heizelemente, doch sie weisen noch Nachteile bezüglich des Materialaufwandes, der Verlegbarkeit und der Funktion sowie des zeitlichen Aufwandes auf.

Aufgabe der vorliegenden Erfindung ist es, ein Flächenaustauscherelement zum Heizen und/oder Kühlen anzugeben, das die genannten Nachteile vermeidet.

Erfindungsgemäß wird diese Aufgabe mit dem Gegenstand des Anspruchs 1 gelöst. Es wird ein Flächenaustauscherelement zum Heizen und/oder Kühlen vorgeschlagen, wobei in dem Flächenaustauscherelement ein von einem flüssigen Wärmeträger durchströmtes Austauscherrohr angeordnet ist, das einen vorzugsweise wellenlinienförmigen insbesondere mäanderförmigen Austauscherabschnitt und vorzugsweise lineare Anschlussabschnitte aufweist, wobei vorgesehen ist, dass das Austauscherrohr in Aufnahmenuten einer Trägerplatte angeordnet ist, wobei die Trägerplatte auf ihrer Vorderseite von einer Speicherplatte und auf ihrer Rückseite von einer Wärmedämmplatte überdeckt ist, dass zwischen der Trägerplatte und der Speicherplatte eine stark wasserbeständige, diffusionsoffene und gut wärmeleitende erste Kleberschicht angeordnet ist, und dass zwischen der Rückseite der Trägerplatte und der Vorderseite der Wärmedämmplatte eine stark wasserbeständige zweite Kleberschicht angeordnet ist. Bei der zum Einsatz kommenden Kleberschicht handelt es sich um eine Schicht eines stark wasserbeständigen Klebers. Solche Kleber sind bekannt für wasserfeste Verleimungen. Es sei hierzu auf das Produktblatt "Kleiberit Technische Daten, Klebit® 303", 2.0/02.04 DG, verwiesen. Stark wasserbeständige bzw. wasserfeste Kleberschichten zeichnen sich dadurch aus, dass sie auch im Langzeiteinsatz durch Wassereinwirkung und/oder Wasserdampfeinwirkung nicht angegriffen werden, d.h. sie verbleiben dicht. Als Langzeiteinsatz wird eine Mindesteinsatzzeit von 10 Jahren definiert.

Das vorgeschlagene Flächenaustauscherelement zeichnet sich durch einen einfachen sandwichartigen Aufbau aus, der zum einen wärmetechnisch optimiert ist und zum anderen ein einbaufertiges Montageelement hoher Festigkeit bildet.

Weil sowohl die auf der Vorderseite der Trägerplatte angeordnete Speicherplatte als auch die auf der Rückseite der Trägerplatte angeordnete Wärmedämmplatte mit Kleberschichten mit der Trägerplatte verbunden sind, weist die Platte einen sandwichartigen Aufbau auf, der funktionelle Vorteile mit hoher Festigkeit verbindet.

Das erfindungsgemäße Flächenaustauscherelement kann weiter eine geringe Bauhöhe aufweisen bei gleichzeitig hoher Stabilität. Es ist flexibel einsetzbar und aus umweltfreundlichen Materialien herstellbar.

Das Flächenaustauscherelement kann sowohl zum Beheizen als auch zum Kühlen eines Raumes eingesetzt werden. Mit dem erfindungsgemäßen Flächenaustauscherelement ist sowohl ein energiesparender Heizbetrieb als auch energiesparender Kühlbetrieb möglich.

Das erfindungsgemäße Flächenaustauscherelement ist besonders gut geeignet, um vorhandene Räume mit minimalem Montageaufwand mit einer Raumklimatisierung nachzurüsten.

Es kann vorgesehen sein, dass die erste Kleberschicht aus einem vernetzten reaktiven Polyurethan-Flüssigklebstoff gebildet ist, dem ein die Wärmeleitfähigkeit verbessernder Zuschlagstoff beigemischt ist. Bei dem Zuschlagstoff kann es sich beispielsweise um ein Metallpulver handeln, vorzugsweise um Aluminiumpulver.

Weiter kann vorgesehen sein, dass die zweite Kleberschicht eine diffusionsoffene Kleberschicht ist. Auf diese Weise wird ein Flächenaustauscherelement erhalten, das den Wasserdampfaustausch nicht behindert, so dass beispielsweise aus der Gebäudewand aufsteigende Feuchtigkeit nicht zu Schimmelbildung führen kann.

Es ist aber auch möglich, dass zwischen der Rückseite der Trägerplatte und der Vorderseite der Wärmedämmplatte eine Dampfsperrschicht oder Dampfbremsschicht angeordnet ist. Die Dampfbremsschicht kann zum Beispiel aus einer feinperforierten Dampfsperrfolie gebildet sein. Der Schichtaufbau des Flächenaustauschelements ist dadurch so modifiziert, dass die Diffusion von Wasserdampf durch den Schichtaufbau unterbrochen oder stark behindert ist. Diese Ausführungsvariante kann zur Klimatisierung von Feuchträumen bevorzugt sein.

In einer vorteilhaften Weiterbildung kann vorgesehen sein, dass zwischen der Vorderseite der Dampfsperrschicht oder Dampfbremsschicht und der Rückseite der Trägerplatte eine dritte Kleberschicht angeordnet ist.

Es hat sich bewährt, dass die dritte Kleberschicht eine stark wasserbeständige, diffusionsoffene Kleberschicht ist.

Es kann aber auch vorgesehen sein, dass die dritte Kleberschicht eine flexible, dampfsperrende Kleberschicht ist. Diese Ausbildung hat den besonderen Vorteil, dass die Dampfsperre durch die Dampfsperrschicht durchgreifende Befestigungselemente nicht beeinträchtigt ist, weil die Kleberschicht sich um das Befestigungselement legt und so die Dampfsperre wieder herstellt.

Es kann weiter vorgesehen sein, dass die zweite Kleberschicht eine flexible, dampfsperrende Kleberschicht ist. Es ist also möglich, die zweite Kleberschicht, die zwischen der Trägerplatte und der Wärmedämmplatte angeordnet ist, als Dampfsperrschicht zu nutzen, wobei diese Dampfsperrschicht den vorstehen beschriebenen Vorteil aufweist, Beschädigungen durch Perforation ohne Funktionseinbuße zu tolerieren.

In einer weiteren vorteilhaften Ausbildung kann vorgesehen sein, dass auf der Vorderseite der Speicherplatte eine Dekorschicht oder eine Grundierungsschicht angeordnet ist. Die Grundierungsschicht kann vorgesehen sein, um einen problemlosen Farbauftrag oder das Aufbringen einer Tapete zu erleichtern.

Weiter kann vorgesehen sein, dass die gegenüberliegenden Längsseiten des Flächenaustauscherelements mit komplementär zueinander angeordneter und ausgebildeter Verbindungsnut bzw. Verbindungsfeder ausgebildet sind. Die vorgeschlagene Nut-Feder-Verbindung erleichtert das exakte und rasche Verbinden der Flächenaustauscherelemente an einer Wand, einer Decke oder einem Fußboden eines Innenraums. Zwischen benachbarten Flächenaustauscherelementen ist keine Fuge ausgebildet, so dass insbesondere bei der Beschichtung des Flächenaustauscherelements mit einer Dekorplatte unmittelbar ein optisch ansprechender Eindruck erhalten wird.

In einer weiteren vorteilhaften Ausbildung kann vorgesehen sein, dass das Flächenaustauscherelement in einem oberen und/oder unteren Randbereich einkürzbar ausgebildet ist, wobei das Austauscherrohr mit Ausnahme der Anschlussabschnitte außerhalb des oberen und/oder unteren Randbereichs angeordnet ist. Es müssen also fabrikseitig nur wenige Höhenabmessungen vorgehalten werden, um die Flächenaustauscherelemente an unterschiedliche Einbaumaße unmittelbar auf der Baustelle anzupassen.

Es hat sich bewährt, dass der bzw. die einkürzbaren Randbereiche durch Markierungen auf dem Flächenaustauscherelement bezeichnet sind. Vorteilhafterweise können mehrere parallele Markierungen in einem festen Abstand angebracht sein, beispielsweise im Abstand von 10 oder 5 mm.

Es kann vorgesehen sein, dass die einkürzbaren Randbereiche insgesamt eine Höhe von 15 % bis 25 % der Höhe des Flächenelements aufweisen, bevorzugt eine Höhe von 15% bis 20 %, noch weiter bevorzugt von 17 % bis 19 %.

Weiter kann vorgesehen sein, dass in die Rückseite des Flächenaustauscherelements Sacklöcher eingebracht sind, die Bohrschablonen für das Ausbilden von Durchgangslöchern bilden.
Die Sacklöcher sind vorteilhafterweise so angeordnet, dass das aus einem Sackloch gebildete Durchgangsloch nicht das Austauscherrohr durchdringt.

Weiter können die Sacklöcher vorteilhafterweise in einem Raster angeordnet sein.

Die drei vorgenannten Ausbildungen erleichtern die Montage der Flachaustauscherelemente auf der Baustelle weiter, den sie ermögliche auf besonders einfache und sichere Weise das Einbringen von Durchgangslöchern die zur Montage mittels Schrauben und Dübeln vorgesehen sein können. Es ist jedoch auch möglich, die Orte der vorgesehenen Löcher durch Markierungen zu bezeichnen, beispielsweise durch Farbmarkierungen oder Vertiefungen zur Zentrierung einer Bohrerspitze. Nach erfolgter Montage des Flächeaustauscherelements kann vorgesehen sein, den Verlauf des Austauscherrohrs durch Auflegen einer Thermofolie sichtbar zu machen, wobei die Thermofolie in dem Bereich aufgelegt wird, in dem ein nachträglich eingebrachtes Durchgangsloch oder Sackloch zur Aufnahme eines Befestigungselements für Einrichtungsgegenstände, wie Bilder, Wandborde, Regalteile oder dergleichen vorgesehen ist.

Weiter hat sich bewährt, dass die Trägerplatte durch eine MDF-Platte (Medium Density Fiberboard) gebildet ist. Die MDF-PLatte hat den Vorteil, dass sie extrem stabill, diffusionsoffen und leicht zu bearbeiten ist. Der Staubanfall bei der Bearbeitung ist gering. Des Weiteren ist sie schwingungsdämpfend.

Es kann auch vorgesehen sein, dass die Trägerplatte durch eine HDF-Platte (High Density Fiberboard) gebildet ist. Von Vorteil ist, dass es sich bei der HDF-Platte um eine brandhemmende Platte handeln kann.

Es ist aber auch möglich, die Trägerplatte aus anderen fräsbaren oder aus gießbaren Materialien auszubilden, wie beispielsweise aus OSB-Platten (Oriented Strand Board, d. h. aus langen, ausgerichtetet Spänen hergestellt), Holzweichfaser-Platten, Styrodur oder auch aus gießbaren Werkstoffen.

Fast alle vorstehend genannten Trägerplattenausführungen haben den Vorteil, dass sie die Festigkeit der Schraubverbindungen und die Sicherheit der Schraubverbindungen garantieren und unempfindlich gegen Montagefehler sind, beispielsweise das Flächenaustauscherelement auch dann sicher halten, wenn das Schraubelement die bevorzugt aus Gipskarton gebildete Speicherplatte bei der Montage beschädigt hat.

Es kann auch vorgesehen sein, das Flächenaustauscherelement als Verkleidung von Möbeln und Einrichtungsgegenständen zu verwenden. Auf diese Weise können beispielsweise in größeren Räumen Bereiche mit einem behaglichen Mikroklima geschaffen werden.

Die Erfindung wird nun anhand von Ausführungsbeispielen näher erläutert. Es zeigen
- Fig. 1: ein Ausführungsbeispiel eine erfindungsgemäßen Flächenaustauscherelements in der Vorderansicht;
- Fig. 2: das Flächenaustauscherelement in Fig. 1 in der Hinteransicht;
- Fig. 3: eine Schnittdarstellung entlang der Schnittlinie III-III in Fig. 1;
- Fig. 4: ein zweites Ausführungsbeispiel des Flächenaustauschelements in Fig. 1;
- Fig. 5: eine Schnittdarstellung entlang der Schnittlinie V-V in Fig. 2;
- Fig. 6: ein montagefertiges Flächenaustauscherelement in der Schnittdarstellung entsprechend Fig. 4;
- Fig. 7: ein erstes Einbaubeispiel des Flächeheizelements in Fig. 1;
- Fig. 8: ein zweites Einbaubeispiel des Flächenaustauscherelements in Fig. 1.

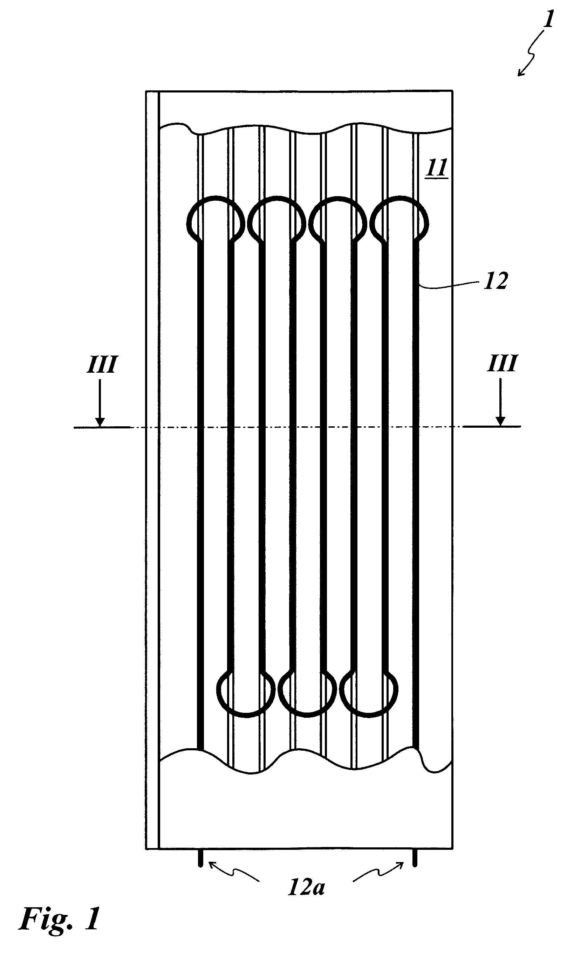

Fig. 1 zeigt ein Flächenaustauscherelement 1 für die Beheizung eines Raumes in einem Gebäude in der Vorderansicht. Das Flächenaustauscherelement 1 ist vorzugsweise vor einer Innenwand des zu beheizenden Raumes angeordnet, kann aber auch für eine Fußbodenheizung oder Deckenheizung vorgesehen sein. Das Flächenaustauscherelement 11 ist zum besseren Verständnis in einer Gebrauchslage dargestellt, die es beim Einbau vor der Innenwand des zu beheizenden Raumes einnimmt. Dabei ist die Vorderseite des Flächeheizelements 1 die Sichtseite bzw. die Seite, die dem zu beheizenden Raum zugewandt ist.

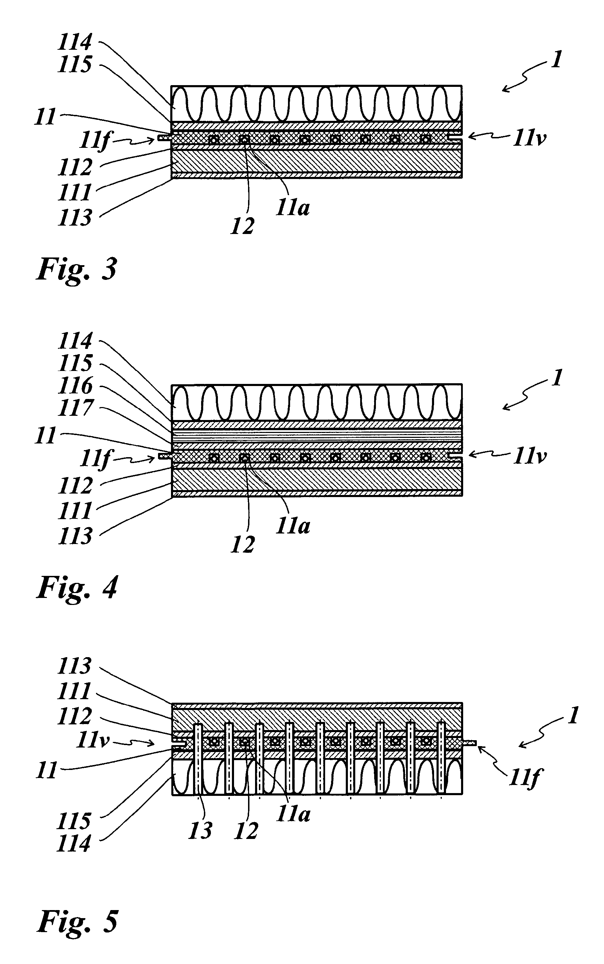

Das Flächenaustauscherelement 1 weist einen mehrschichtigen Aufbau auf, der weiter unten in Fig. 3 näher beschrieben ist.

In eine Trägerplatte 11 sind Aufnahmenuten 11 n eingebracht, in denen ein Austauscherrohr 12 angeordnet ist, das einen mäanderförmigen Austauscherabschnitt und lineare Anschlussabschnitte 12a aufweist. Die Endabschnitte der Anschlussabschnitte 12a stehen aus der unteren Stirnseite des Flächenaustauscherelements 1 hervor. Die Aufnahmenuten 11a sind in die Vorderseite der Trägerplatte 11 als parallele Nuten eingebracht, die parallel zu den Längsseiten des Flächenaustauscherelements 1 angeordnet sind. Die Aufnahmenuten können vorzugsweise einen U-förmigen oder quadratischen Querschnitt aufweisen, wobei die Breite der Nuten so gewählt ist, dass das Austauscherrohr unter leichter Pressung oder mit kleinem Spiel in die Nuten einlegbar ist. Wie in Fig. 1 zu erkennen, ist das Austauscherrohr 12 mäanderförmig verlegt. Folglich sind weiter bogenförmige Nutabschnitte vorgesehen, die jeweils zwei benachbarte parallele Nutabschnitte miteinander verbinden. Es ist aber auch möglich, die Aufnahmenut 11a dem vorgesehenen Verlauf des mäanderförmigen Austauscherrohres 12 folgend im Stück einzubringen.

Das Austauscherrohr 12 kann beispielsweise aus Polyethylen oder Polyamid in einer für Austauscherrohre geeigneten Spezialausführung bestehen, wobei Wandstärke und/oder Durchmesser in Abhängigkeit von Einsatzparametern, wie zum Beispiel der Wärmeleistung des Flächenaustauscherelements wählbar sind.

Benachbarte Flächenaustauscherelemente 1 sind durch ein Nut-Feder-System miteinander verbindbar. Dazu weist die Trägerplatte 11 weist an den gegenüberliegenden Längsseiten eine Verbindungsnut 11v bzw. eine Verbindungsfeder 11f auf.

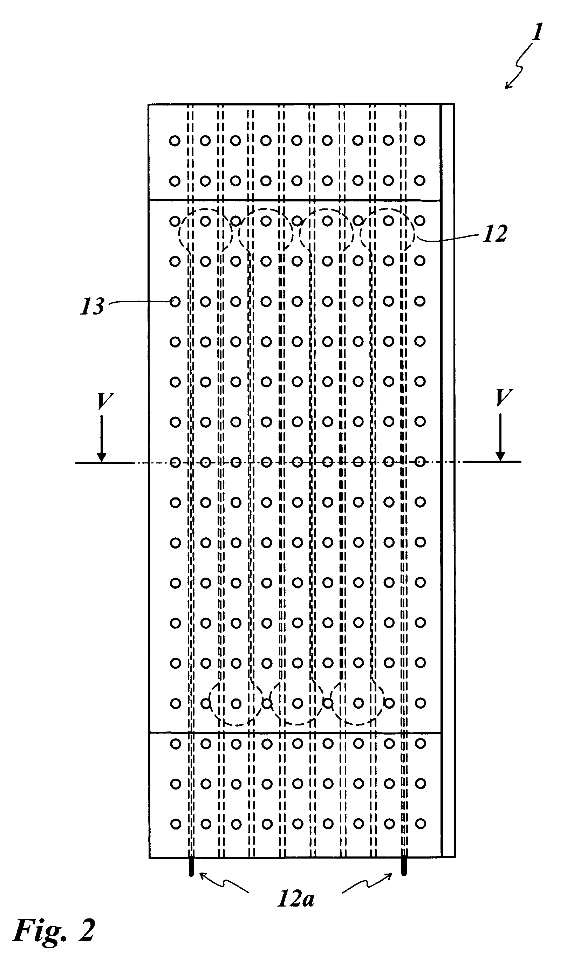

Wie in Fig. 2 und 5 zu erkennen, wird die Rückseite des Flächenaustauscherelements 1 von Sacklöchern 13 durchgriffen, die in einem Raster angeordnet sind. Die Sacklöcher 13 sind als Bohrschablonen zum Ausbilden von Durchgangslöchern 13d zur Montage des Flächenaustauscherelements 1 vorgesehen. Wie in Fig. 2 zu erkennen, sind die Sacklöcher 13 so angeordnet, dass das aus dem Sackloch 13 hervorgegangene Durchgangsloch 13d nicht das Austauscherrohr 12 durchdringt. Neben dem genannten Sicherheitsaspekt ist vorteilhaft, dass ein Ausmessen der Lage der Durchgangslöcher 13d nicht erforderlich ist.

Die Rückseite des Flächenaustauscherelements 1 weist zwei zu den Querseiten des Flächenaustauscherelements 1 parallel angeordnete Markierungen auf, die einen oberen bzw. einen unteren Randbereich des Flächenaustauscherelements 1 begrenzen, in dem das Austauscherrohr 12 nicht verläuft und der daher einkürzbar ist. Beim Einkürzen des unteren Randbereichs ist darauf zu achten, dass das Austauscherrohr 12, falls erforderlich, erst nach dem Einkürzen abgelängt wird. Es können auch mehrere parallele Markierungen vorgesehen sein, die zusätzlich Maßangaben aufweisen können, um die Montage des Flächenaustauscherelements 1 weiter zu vereinfachen. Die Markierungen können beispielsweise im Abstand von 10 mm angeordnet sein. Bei den Markierungen kann es sich beispielsweise um Farbmarkierungen oder um Rillen handeln. Bei einer typischen Abmessung des Flächenaustauscherelements 1 von 600 mm x 2800 mm kann der obere Randbereich eine Höhe von 300 mm und der untere Randbereich eine Höhe von 200 mm aufweisen, d. h. das Flächenaustauscherelement ist oben um etwa 11 % und unten um etwa 7% einkürzbar, also insgesamt um 18 % einkürzbar. Für andere Plattenabmessungen können andere Relationen vorgesehen sein, beispielsweise für Nischen, Laibungen, Säulen und Wandabschnitten unter und/oder über Fenstern. Die Anordnung des Flächenaustauscherelements 1 über dem Fenster kann vorzugsweise zur Bauteiltemperierung vorgesehen sein.

Die Fig. 3 zeigt in einer nicht maßstäblichen Schnittansicht entlang der Schnittlinie III-III in Fig. 1 den schichtweisen Aufbau des Flächenaustauscherelements 1. Insbesondere die Dicken und die Dickenrelationen der einzelnen am Schichtaufbau beteiligten Schichten sind nicht maßstäblich dargestellt.

Auf der Vorderseite der Trägerplatte 11 ist eine Speicherplatte 111 angeordnet, die je nach Anforderung und Einsatzort, beispielsweise Boden, Wand oder Decke, aus Gipskarton, Gipsfaser, Holzfaser, Metall oder einem anderen Material ausgebildet sein kann und die weiter eine dem Einsatzzweck angepasste Dicke aufweist. Zwischen der Rückseite der Speicherplatte 111 und der Vorderseite der Trägerplatte 11 ist eine erste Kleberschicht 112 angeordnet, die aus einem wasserbeständigen, diffusionsoffenen und gut wärmeleitenden Kleber besteht. Bei dem Kleber kann es sich beispielsweise um einen reaktiven Polyurethan-Flüssigklebstoff handeln, der durch Zugabe eines Zuschlagstoffes, vorzugsweise eines Metallpulvers, beispielsweise von Aluminiumpulver, in seiner Wärmeleitfähigkeit verbessert ist. Dieser Klebstoff vernetzt nach kurzer offener Zeit (5 bis 10 min) zu einer duroplastischen Klebefuge.

Die Vorderseite der Speicherplatte 111 ist mit einer Dekorschicht 113 überdeckt und vorzugsweise eine Fertigoberfläche bildet. Es ist aber auch möglich, dass anstelle der Dekorschicht eine Grundierungsschicht aufgetragen ist, die einen Farbauftrag oder das Aufbringen einer Tapete ermöglicht.

An der Rückseite des Flächenaustauscherelements 1 ist eine Wärmedämmplatte 114 angeordnet, die vorzugsweise aus einem umweltfreundlichen Dämmstoff bestehen kann, beispielsweise aus einer Holzweichfaserplatte mit einer Dicke von wenigstens 4 mm. Zwischen der Vorderseite der Wärmedämmplatte 114 und der Rückseite der Trägerplatte 11 ist eine zweite Kleberschicht 115 angeordnet, bei der es sich vorzugsweise um einen stark wasserbeständigen diffusionsoffenen Kontaktkleber handelt.

Wie in Fig. 4 dargestellt, kann optional auf der Rückseite der Trägerplatte 11 eine Dampfsperrschicht 116 angeordnet sein, die als Dampfbremse bzw. Dampfsperre vorgesehen sein kann. Es kann sich dabei beispielsweise um eine wasserdampfundurchlässige Folie handeln. Zwischen der Vorderseite der Dampfsperrschicht 116 und der Rückseite der Trägerplatte 11 ist eine dritte Kleberschicht 117 angeordnet, bei der es sich um einen stark wasserbeständigen diffusionsoffenen Kontaktkleber handeln kann. Es kann aber auch ein flexibler, dampfsperrender Kleber vorgesehen sein, der die Dampfsperrfunktion auch bei Verletzung der Dampfsperrschicht beispielsweise durch Befestigungselemente aufrecht erhält, indem er sich um das Befestigungselement legt und eine wasserdichte Verbindung mit der Oberfläche des Befestigungselements bildet. Es ist auch möglich, die zweite Kleberschicht 115 so auszubilden und auf die Dampfsperrschicht zu verzichten, um eine Dampfsperre zu erhalten.

Die Fig. 5 zeigt das Flächenaustauscherelement 1 in einer nicht maßstäblichen Schnittansicht entlang der Schnittlinie IV-IV in Fig. 2, um die Lage und Ausbildung der Sacklöcher 13 zu verdeutlichen. Dabei ist zu beachten, dass es sich um eine aus der Fig. 2 abgeleitete Schnittansicht handelt, und dass Fig. 2 die Rückseite des Flächenaustauscherelements 1 zeigt.

Die Sacklöcher 13 weisen in dem in Fig. 5 dargestellten Ausführungsbeispiel eine solche Tiefe aus, dass sie sich von der Rückseite der Wärmedämmplatte 114 bis in die Speicherplatte 11 erstrecken. Dadurch wird eine gute Führung eines Bohrers erreicht, wenn ein Sackloch zu einem Durchgangsloch erweitert werden soll. Es ist aber auch möglich, das Sackloch 13 mit geringerer Länge auszubilden, insbesondere wenn die Wärmedämmplatte 114 aus einem mechanisch stabilen Werkstoff ausgebildet ist, der beim Ansetzen eines Bohrers nicht zum Ausreißen neigt. In diesem Fall kann das Sackloch gerade die Wärmedämmplatte 114 durchgreifen oder in der Wärmedämmplatte 114 enden.

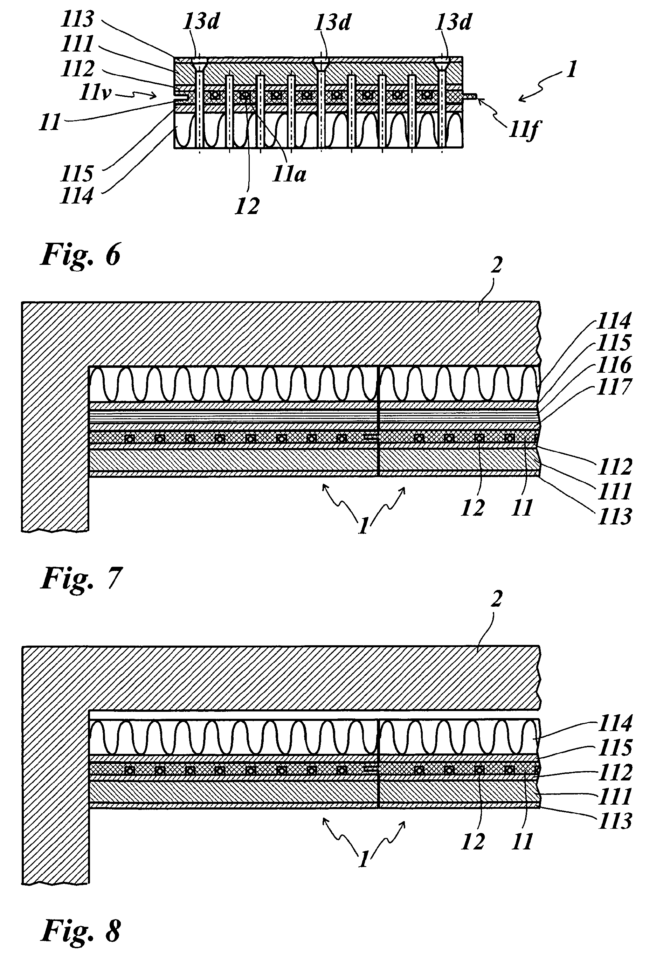

Fig. 6 zeigt nun das Flächenaustauscherelement 1 in Fig. 5, bei dem einige der Sacklöcher 13 in Durchgangslöcher 13d umgewandelt sind, wobei die Durchgangslöcher 13d im Bereich der Vorderseite der Speicherplatte 111 mit einer Senkung zur Aufnahme eines Senkschraubenkopfes ausgebildet sind.

Die Fig. 7 und 8 zeigen Einbaubeispiele des Flächenaustauscherelementes 1.

Fig. 7 zeigt nebeneinander angeordnet Flächenaustauscherelemente 1, die vor einer Innenwand eines einen Innenraum bildenden Mauerwerks 2 angeordnet sind. Die Flächenaustauscherelemente sind über die weiter oben beschriebene Nut-Feder-Verbindung in einer Reihe angeordnet, wobei zwischen benachbarten Flächenaustauscherelementen 1 keine Zwischenfuge ausgebildet ist. Der Schichtaufbau des Flächenaustauscherelements 1 entspricht dem weiter oben in Fig. 4 beschriebenen Aufbau mit zusätzlicher Dampfsperrschicht 116. Die Flächenaustauscherelemente 1 sind unmittelbar auf einer Innenwand des Mauerwerks 2 mittels Durchgangsschrauben und in dem Mauerwerk 2 eingebrachten Dübeln befestigt. Zur vereinfachten Darstellung sind in Fig. 7 und 8 die Dübelverbindungen nicht eingezeichnet. Die Austauscherrohre 12 sind über die Anschlussabschnitte 12a an einen Wärmeträgerkreislauf angeschlossen, vorzugsweise über lösbare Verbindungen. Beispielsweise kann vorgesehen sein, die Flächenaustauscherelemente über ein Zwischenstück an handelsübliche Heizkörper anzuschließen. Bei dem Zwischenstück kann es sich um ein Mischventil handeln, das mit einer vorzugsweise elektronischen Ventilsteuerung verbunden ist. Die Ventilsteuerung kann in ein übergeordnetes Klimaregelsystem eingebunden sein.

Die unmittelbar auf der Innenwand angeordneten Flächenaustauscherelemente geben ihre Wärme bevorzugt in den Innenraum ab, erwärmen jedoch auch die Innenwand des Mauerwerks 2 und sorgen infolge ihres Aufbaus mit der Dampfsperrschicht 116 auch dafür, dass vom Mauerwerk 2 abgegebene Feuchtigkeit nicht durch den Schichtaufbau diffundiert und umgekehrt aus Innenraum abgegebene Feuchtigkeit nicht bis zur Innenwand des Mauerwerks 2 gelangt und dort kondensiert.

Das in Fig. 8 dargestellte Einbaubeispiel unterscheidet sich von dem in Fig. 7 dargestellten Einbaubeispiel dadurch, dass zwischen der Rückseite des Flächenaustauscherelements 1 und der Innenwand des Mauerwerks 2 ein Luftspalt ausgebildet ist. Vorzugsweise ist der Luftspalt hinterlüftet. Weiter ist bei dem Flächenaustauscherelement 1 auf die Dampfsperrschicht 116 verzichtet, so dass Feuchtigkeit in beiden Richtungen durch das Flächenaustauscherelement diffundieren kann.

Bezugszeichenliste
- 1: Flächenaustauscherelement
- 2: Mauerwerk
- 11: Trägerplatte
- 11a: Aufnahmenut
- 11f: Verbindungsfeder
- 11v: Verbindungsnut
- 12: Austauscherrohr
- 12a: Anschlussabschnitt
- 13: Sackloch
- 13d: Durchgangsloch
- 111: Speicherplatte
- 112: erste Kleberschicht
- 113: Dekorschicht
- 114: Wärmedämmplatte
- 115: zweite Kleberschicht
- 116: Dampfsperrschicht
- 117: dritte Kleberschicht

## Patentansprüche

1. Flächenaustauscherelement (1) zum Heizen und/oder Kühlen, wobei in dem Flächenaustauscherelement (1) ein von einem flüssigen Wärmeträger durchströmtes Austauscherrohr (12) angeordnet ist, das einen Austauscherabschnitt und Anschlussabschnitte (12a) aufweist,
**dadurch gekennzeichnet,**
**dass** das Austauscherrohr (12) in Aufnahmenuten (11a) einer Trägerplatte(11) angeordnet ist, wobei die Trägerplatte (11) auf ihrer Vorderseite von einer Speicherplatte (111) und auf ihrer Rückseite von einer Wärmedämmplatte (114) überdeckt ist,
**dass** zwischen der Trägerplatte (11) und der Speicherplatte (111) eine stark wasserbeständige, diffusionsoffene und gut wärmeleitende erste Kleberschicht (112) angeordnet ist, und
**dass** zwischen der Rückseite der Trägerplatte (11) und der Vorderseite der Wärmedämmplatte (114) eine stark wasserbeständige zweite Kleberschicht (115) angeordnet ist.

2. Flächenaustauscherelement nach Anspruch 1,
**dadurch gekennzeichnet,**
**dass** die erste Kleberschicht (112) aus einem vernetzten reaktiven Polyurethan-Flüssigklebstoff gebildet ist, dem ein die Wärmeleitfähigkeit verbessernder Zuschlagstoff beigemischt ist.

3. Flächenaustauscherelement nach Anspruch 1 oder 2,
**dadurch gekennzeichnet,**
**dass** die zweite Kleberschicht (115) eine diffusionsoffene Kleberschicht ist.

4. Flächenaustauscherelement nach einem der vorangehenden Ansprüche,
**dadurch gekennzeichnet,**
**dass** zwischen der Rückseite der Trägerplatte (11) und der Vorderseite der Wärmedämmplatte (114) eine Dampfsperrschicht oder Dampfbremsschicht (116) angeordnet ist.

5. Flächenaustauscherelement nach Anspruch 3,
**dadurch gekennzeichnet,**
**dass** zwischen der Vorderseite der Dampfsperrschicht oder Dampfbremsschicht (116) und der Rückseite der Trägerplatte (11) eine dritte Kleberschicht (117) angeordnet ist.

6. Flächenaustauscherelement nach Anspruch 5,
**dadurch gekennzeichnet,**
**dass** die dritte Kleberschicht eine stark wasserbeständige, diffusionsoffene Kleberschicht ist.

7. Flächenaustauscherelement nach Anspruch 5,
**dadurch gekennzeichnet,**
**dass** die dritte Kleberschicht eine flexible, dampfsperrende Kleberschicht ist.

8. Flächenaustauscherelement nach Anspruch 1 oder 2,
**dadurch gekennzeichnet,**
**dass** die zweite Kleberschicht eine flexible, dampfsperrende Kleberschicht ist.

9. Flächenaustauscherelement nach einem der vorangehenden Ansprüche,
**dadurch gekennzeichnet,**
**dass** auf der Vorderseite der Speicherplatte (111) eine Dekorschicht (113) oder eine Grundierungsschicht angeordnet ist.

10. Flächenaustauscherelement nach einem der vorangehenden Ansprüche,
**dadurch gekennzeichnet,**
**dass** die gegenüberliegenden Längsseiten des Flächenaustauscherelements (1) mit komplementär zueinander angeordneter und ausgebildeter Verbindungsnut (11v) bzw. Verbindungsfeder (11f) ausgebildet sind.

11. Flächenaustauscherelement nach einem der vorangehenden Ansprüche,
**dadurch gekennzeichnet,**
**dass** das Flächenaustauscherelement (1) in einem oberen und/oder unteren Randbereich einkürzbar ausgebildet ist, wobei das Austauscherrohr (12) mit Ausnahme der Anschlussabschnitte (12a) außerhalb des oberen und/oder unteren Randbereichs angeordnet ist.

12. Flächenaustauscherelement nach Anspruch 11,
**dadurch gekennzeichnet,**
**dass** der bzw. die einkürzbaren Randbereiche durch Markierungen auf dem Flächenaustauscherelement bezeichnet sind.

13. Flächenaustauscherelement nach Anspruch 11 oder 12,
**dadurch gekennzeichnet,**
**dass** die einkürzbaren Randbereiche insgesamt eine Höhe von 15 % bis 25 % der Höhe des Flächenelements aufweisen, bevorzugt eine Höhe von 15% bis 20 %, noch weiter bevorzugt von 17 % bis 19 %.

14. Flächenaustauscherelement nach einem der vorangehenden Ansprüche,
**dadurch gekennzeichnet,**
**dass** in die Rückseite des Flächenaustauscherelements (1) Sacklöcher (13) eingebracht sind, die Bohrschablonen für das Ausbilden von Durchgangslöchern (13d) bilden.

15. Verwendung des Flächenaustauscherelements nach einem der vorangehenden Ansprüche als Verkleidung von Möbeln und Einrichtungsgegenständen.
